**Europäisches Patentamt**

**European Patent Office**

**Office européen des brevets**

(19)

(11) Veröffentlichungsnummer : **0 216 222**
**B1**

(12) **EUROPÄISCHE PATENTSCHRIFT**

(45) Veröffentlichungstag der Patentschrift :
30.11.88

(51) Int. Cl.⁴ : **B 65 G 51/32**

(21) Anmeldenummer : 86112261.2

(22) Anmeldetag : 04.09.86

(54) **Rohrpoststation.**

(30) Priorität : 21.09.85 DE 3533776

(43) Veröffentlichungstag der Anmeldung :
01.04.87 Patentblatt 87/14

(45) Bekanntmachung des Hinweises auf die Patenterteilung : 30.11.88 Patentblatt 88/48

(84) Benannte Vertragsstaaten :
AT BE CH FR IT LI LU NL SE

(56) Entgegenhaltungen :
EP-A- 0 056 559
DE-B- 1 244 065

(73) Patentinhaber : **Komtec GmbH Kommunikationstechnische Anlagen**
**Lärchenstrasse 141**
**D-6000 Frankfurt/Main 80 (DE)**

(72) Erfinder : **Lindner Jürgen, Dipl.-Ing.**
**Ringslebenstrasse 93**
**D-1000 Berlin 40 (DE)**

(74) Vertreter : **Knoblauch, Ulrich, Dr.-Ing.**
**Kühhornshofweg 10**
**D-6000 Frankfurt am Main 1 (DE)**

**Beschreibung**

Die Erfindung bezieht sich auf eine Rohrpoststation für Sende-, Empfangs- und Durchlaufbetrieb, mit einer Ladeöffnung für abzusendende Transportbüchsen, mit drei Rohrkammern in einem Gehäuse, das eine erste Wand mit einer ersten Fahrrohranschlußöffnung für den Durchgang einer die Rohrpost enthaltenden Transportbüchse und mit einer Ausfahröffnung sowie eine zweite Wand mit einer zur ersten koaxialen zweiten Fahrrohranschlußöffnung aufweist, wobei die Ausfahr- und Fahrrohranschlußöffnungen und Rohrkammern in einer gemeinsamen Ebene angeordnet sind, die erste und zweite Rohrkammer durch einen in dieser Ebene verschiebbaren Tragkörper starr gekoppelt sind und der Tragkörper eine erste Stellung hat, in der die erste Rohrkammer mit den Fahrrohranschlußöffnungen und die zweite Rohrkammer mit der Ausfahröffnung fluchten, und eine zweite Stellung hat, in der die zweite Rohrkammer mit den Fahrrohranschlußöffnungen fluchtet.

Bei einer bekannten Rohrpoststation dieser Art (EP-56559A2) ist die dritte Rohrkammer ein die Oberseite des Gehäuses durchsetzender Rohrstutzen, dessen Unterseite durch einen zur Seite schwenkbaren Anschlag verschließbar oder freigebbar ist. In der Verschlußstellung des Anschlags dient der Rohrstutzen als Speicher für eine abzusendende (abzurufende) Rohrpost-Transportbüchse. Zum Absenden der Transportbüchse wird der Anschlag unter dem Rohrstutzen weggeschwenkt und die als Durchfahrrohrstück dienende erste Rohrkammer unter den Rohrstutzen geschoben, so daß die Durchfahr-Rohrkammer die Transportbüchse aufnimmt und auf dem Rückweg in den Fahrrohrdurchgang mitnimmt. Die zweite Rohrkammer dient lediglich der Aufnahme einer empfangenen Transportbüchse, wozu die zweite Rohrkammer an ihrem oberen Ende ständig verschlossen und am unteren Ende ständig geöffnet ist. Nachdem eine Transportbüchse auf ihrem Wege durch das Fahrrohr in die Aufnahme-Rohrkammer gedrückt worden und dort zum Stillstand gekommen ist, fährt der Tragkörper die zweite Rohrkammer in die Ausfahrstellung über der Ausfahröffnung. In dieser Stellung kann die Transportbüchse durch die Ausfahröffnung aus dem Gehäuse der Rohrpoststation herausfallen. Diese Rohrpoststation besitzt mithin nur einen Speicher für nur eine abzusendende Transportbüchse. Somit muß erst das Absenden bzw. Abrufen einer gespeicherten Transportbüchse abgewartet werden, bevor eine weitere Transportbüchse in den Speicher eingegeben und abgerufen werden kann. Andererseits hat die Anordnung aller drei Rohrkammern in einer Ebene der Vorteil, daß die Rohrpoststation nur eine geringe Tiefe senkrecht zur Verschiebeebene des Tragkörpers aufweist, so daß die Rohrpoststation raumsparend an einer Gebäudewand, bei Anordnung der Verschiebeebene parallel zur Gebäudewand, angebracht werden kann, ohne übermäßig weit und damit hinderlich von der Gebäudewand abzustehen.

Bei einer anderen bekannten Rohrpoststation (DE-GM 19 27 586) mit ebenfalls drei Rohrkammern ist die eine außerhalb des Gehäuses als Speicher angeordnet, während die beiden anderen Rohrkammern in dem Gehäuse um eine gemeinsame Drehachse drehbar gelagert sind. Diese drehbare Lagerung der beiden inneren Rohrkammern ergibt eine verhältnismäßig große Tiefe der Rohrpoststation senkrecht zu einer Gebäudewand, vor der die Rohrpoststation gegebenenfalls installiert wird. In der äußeren Speicher-Rohrkammer können zwar mehrere Transportbüchsen übereinander angeordnet werden, jedoch ist ein zusätzlicher Elektromagnet mit entsprechender Steuerung erforderlich, um jeweils nur eine Transportbüchse aus der Speicher-Rohrkammer zur Absendung freizugeben.

Auch bei einer weiteren bekannten Rohrpoststation (EP-0056101A1), bei der die Durchfahr-Rohrkammer schwenkbar ist, ist nur eine Speicher-Rohrkammer vorgesehen, aus der eine Transportbüchse über eine schwenkbare Leitrinne, die zusammen mit der Durchfahr-Rohrkammer schwenkbar ist, in das Fahrrohr geleitet werden kann.

Der Erfindung liegt die Aufgabe zugrunde, eine Rohrpoststation der gattungsgemäßen Art unter Beibehaltung ihres flachen Aufbaus und ohne Erhöhung der Anzahl der Rohrkammern dahingehend zu verbessern, daß sie zur gleichzeitigen Speicherung zweier Transportbüchsen bis zum Abruf geeignet ist.

Erfindungsgemäß ist diese Aufgabe dadurch gelöst, daß der Tragkörper eine dritte Stellung hat, in der die dritte Rohrkammer mit den Fahrrohranschlußöffnungen fluchtet, daß die dritte Rohrkammer mit der zweiten Rohrkammer durch den Tragkörper weitgehend in gleicher Höhe mit der ersten und der zweiten Rohrkammer starr gekoppelt ist und daß ein erster Schieber zum wahlweisen Verschließen und Öffnen der mit der ersten Fahrrohranschlußöffnung fluchtenden Rohrkammerenden vorgesehen ist.

Bei dieser Ausbildung kann sowohl die erste als auch die dritte Rohrkammer als Speicher benutzt und jeweils in die Stellung zwischen den Fahrrohranschluß-Rohrstutzen zum Absenden einer Transportbüchse gebracht werden. Die zweite Rohrkammer kann dagegen sowohl als Empfangs-Rohrkammer wie auch als Durchfahr-Rohrkammer dienen.

Statt nur eines Schiebers für die erste Fahrrohranschlußöffnung kann auch ein zweiter Schieber zum wahlweisen Verschließen und Öffnen der mit der Ausfahröffnung fluchtenden Rohrkammerenden vorgesehen sein, wobei sich die zweite Rohrkammer zwischen den beiden Speicher-Rohrkammern befinden kann, so daß man mit kurzen Verschiebewegen für den Tragkörper auskommt.

Bei einer Rohrpoststation, bei der der Mittelachsabstand von erster und zweiter Rohrkammer gleich dem Mittelachsabstand von erster Fahrrohranschlußöffnung und Ausfahröffnung ist, kann die zweite Rohrkammer in der Mitte zwischen der ersten und der dritten Rohrkammer angeordnet sein. Hierbei wird bei einer Verschiebung der ersten Rohrkammer in die Ausfahrposition gleichzeitig die zweite Rohrkammer in die Durchfahrposition gebracht.

Alternativ kann dafür gesorgt sein, daß der Mittelachsabstand von erster und dritter Rohrkammer gleich dem halben Mittelachsabstand von erster Fahrrohranschlußöffnung und Ausfahröffnung ist und daß die dritte Rohrkammer in der Mitte zwischen der zweiten und der ersten Rohrkammer angeordnet ist. Hierbei wird bei einer Verschiebung der Durchfahr-Rohrkammer in die Ausfahrposition gleichzeit die erste Rohrkammer in die Durchfahrposition gebracht.

Ferner kann der erste Schieber in der ersten Fahrrohranschlußöffnung gelagert sein, so daß die Innenseite der ersten Wand und die Innenseite des ersten Schiebers weitgehend in derselben Ebene liegen. In geschlossenem Zustand des Schiebers ergibt sich dann eine ebene Gleitfläche, auf der die Transportbüchsen in den unten offenen Rohrkammern bei einer Verschiebung des Tragkörpers ungehindert entlanggleiten können.

Auch der gegebenenfalls vorgesehen zweite Schieber kann in der Ausfahröffnung gelagert sein, so daß die Innenseite der ersten Wand und die Innenseite des zweiten Schiebers weitgehend in derselben Ebene liegen und die Transportbüchsen auf der so gebildeten ebenen Gleitfläche ungehindert verschiebbar sind.

Der erste Schieber kann plattenförmig und die erste Fahrrohranschlußöffnung durch den ersten Schieber luftdicht verschließbar sein. Auch der zweite Schieber kann plattenförmig und die Ausfahröffnung durch den zweiten Schieber luftdicht verschließbar sein. Auf diese Weise verhindern der erste Schieber oder beide Schieber einen Durchtritt der Förderluft nach außen beziehungsweise beim Abbremsen einer Transportbüchse in der Durchfahr-Rohrkammer.

Vorzugsweise ist der erste Schieber ein Drehschieber. Ein Drehschieber läßt sich leicht mittels eines Drehantriebs verstellen.

Ferner kann der Drehschieber eine Platte mit einer sich über wenigstens etwa 2,5 Quadranten erstreckenden Kreiskontur und mit einem Durchgangsloch in ihrem einen Endquadranten aufweisen, das einen Durchmesser aufweist, der weitgehend dem Innendurchmesser der Rohrkammern entspricht. Das Durchgangsloch dieses Drehschiebers kann mit der Ausfahröffnung zur Deckung gebracht werden, um eine Transportbüchse abzusenden oder durchfahren zu lassen. Im Bereich der durch den Tragkörper bewirkten Verschiebung der Transportbüchsen außerhalb des Durchgangsloches bei geöffnetem Drehschieber oder über den gesamten Verschiebebereich der Transportbüchsen ist dennoch eine durchgehende Gleitfläche für die Transportbüchsen sichergestellt.

Der Tragkörper kann eine ebene Oberseite aufweisen, durch die die zweite Fahrrohranschlußöffnung, bei einer Verschiebung der zweiten Rohrkammer neben die Fahrrohranschlußöffnungen, verschließbar ist. Dadurch kann keine Fahrluft bei neben den Fahrrohranschlußöffnungen liegender als Durchfahr-Rohrkammer dienender zweiter Rohrkammer über die durch die zweite Fahrrohranschlußöffnung gebildete Einfahröffnung in das Stationsgehäuse eintreten und demzufolge auch nicht über die Ausfahröffnung austreten.

Die Enden der zweiten Rohrkammer können durch je eine Ringdichtung gegen den ersten Schieber beziehungsweise gegen die zweite Wand abdichtbar sein. Auf diese Weise wird der Austritt von Fahrluft in der Durchgangsstellung der zweiten Rohrkammer verhindert.

Ferner ist es günstig, die Verschiebeebene des Tragkörpers zur Frontseite des Gehäuses parallel zu wählen und die erste und die dritte Rohrkammer mit einer einer frontseitigen Ladeöffnung des Gehäuses zugekehrten Ladeöffnung zu versehen. Bei dieser Ausbildung kann die Rohrpoststation nur von der Vorderseite her geladen werden. Es ist daher möglich, sie in einer Gebäudewand mit der Vorderseite der Gebäudewand fluchtend zu versenken, ohne eine Aussparung in der Gebäudewand auf der Oberseite des Gehäuses zum Einführen einer Transportbüchse in einer Speicher-Rohrkammer freizulassen. Vielmehr ist lediglich auf der Unterseite der Rohrpoststation eine derartige Aussparung der Gebäudewand zur Ausgabe einer Transportbüchse erforderlich.

Bei einer Rohrpoststation, bei der die Fahrrohranschlußöffnungen jeweils mit einem Fahrrohranschlußstutzen versehen sind, die in Abhängigkeit von der Stellung der Rohrkammern durch einen Umluftkanal verbindbar sind, ist es günstig, wenn der Umluftkanal stationär und in Abhängigkeit von der Stellung der Rohrkammern durch ein Sperrglied absperrbar ist. Auf diese Weise wird selbsttätig für die Aufrechterhaltung des Förderluftstroms beim Abbremsen einer Transportbüchse in der Empfangs-Rohrkammer durch das Luftpolster gesorgt, das zwischen der Transportbüchse und dem durch einen Schieber abgeschlossenen Ende der Empfangs-Rohrkammer eingeschlossen ist.

Sodann können die Schieber weitgehend kreisrunde Platten, in senkrecht zur Frontseite des Gehäuses verlaufenden Führungsnuten der ersten Wand gelagert und durch seitlich neben den Führungsnuten gelagerte reversierbare Motoren über Schwenkhebel verschiebbar sein. Diese Anordnung ermöglicht auch bei Verschiebung der Schieber in senkrechter Richtung zur Fahrebene des Tragkörpers die Einhaltung einer geringen Bautiefe der Rohrpoststation, ohne die Rohrpoststation zu verbreitern.

Die Erfindung und ihre Weiterbildungen werden nachstehend anhand der Zeichnung bevorzugter Ausführungsbeispiele näher beschrieben. Es zeigen:

Fig. 1   einen Vertikalschnitt durch ein erstes Ausführungsbeispiel einer erfindungsgemäßen Rohrpoststation,

Fig. 2 den Schnitt A-1 nach Fig. 1,

Fig. 3 den Schnitt B-B nach Fig. 1,

Fig. 4 einen Vertikalschnitt durch ein zweites Ausführungsbeispiel einer erfindungsgemäßen Rohrpoststation,

Fig. 5 den Schnitt C-C nach Fig. 4 und

Fig. 6 den Schnitt D-D nach Fig. 4.

Die dargestellte Rohrpoststation hat ein Gehäuse 1 mit einer oberen Wand 2, einer unteren Wand 3, seitlichen Wänden 4 und 5, einer oberen Zwischenwand 6 und einer unteren Zwischenwand 7, einer hinteren Wand 8, einer vorderen Wand 9 mit einer Öffnung 10 und einer die Öffnung 10 hermetisch verschließenden Tür 11.

Ein Fahrrohranschluß-Rohrstutzen 12 für den Anschluß des einen Abschnitts eines nicht dargestellten Fahrrohrs und ein Fahrrohranschluß-Rohrstutzen 13 für den Anschluß des anderen Abschnitts des Fahrrohrs ragen jeweils durch eine Öffnung in der oberen Wand 2 bzw. der unteren Wand 3 bis in eine Fahrrohranschlußöffnung 14 in der oberen Zwischenwand 6 bzw. eine Fahrrohranschlußöffnung 15 in der unteren Zwischenwand 7, wobei die Anschlußstellen der Fahrrohranschluß-Rohrstutzen 12, 13 zumindest in den Öffnungen 14 bzw. 15 hermetisch abgedichtet sind. Sodann ist ein Ausfahrrohrstutzen 16 durch eine Öffnung in der unteren Wand 3 bis in eine Ausfahröffnung 17 in der unteren Zwischenwand 7 eingeführt und zumindest in der Ausfahröffnung 17 hermetisch abgedichtet.

Im Inneren des Gehäuses 1 ist ein Tragkörper 18, hier ein Wagen, auf Schienen 19, 20 mittels Rollen 21 bis 25 in einer zur Frontseite bzw. vorderen Wand 9 parallelen, vertikalen Ebene verschiebbar gelagert. Die Rollen 21 bis 25 umgreifen die Schienen teilweise, wobei die Rollen 21 und 22 auf der Oberseite der Schiene 19, die Rolle 23 an der Unterseite der Schiene 19 und die Rollen 24 und 25 auf der Oberseite der Schiene 20 entlanglaufen. Dadurch, daß die Rollen 21 bis 25 die Schienen 19, 20 teilweise umgreifen, ist eine Führung des Tragkörpers 18 in der Ebene der Schienen 19 und 20 sichergestellt, während die Rolle 23 ein Abheben der Rollen 21, 22 und 24, 25 von den Schienen verhindert.

Der Tragkörper 18 weist an ihren beiden Enden offene Rohrkammern 26, 27 und 28 auf, die ebenfalls in einer zur Frontseite des Gehäuses 1 parallelen Ebene und in etwa gleicher Höhe angeordnet sind. Die Mittelachsen der als Rohrstücke ausgebildeten Rohrkammern 26 bis 28 verlaufen vertikal, wobei die beiden seitlichen Rohrkammern 26 und 28 von der mittleren Rohrkammer 27 den gleichen Mittelachsabstand wie die Rohrstutzen 13 und 16 voneinander haben. Während die seitlichen Rohrkammern 26 und 28 jeweils eine der Frontseite des Gehäuses 1 bzw. der Gehäuseöffnung 10 zugekehrte Ladeöffnung 29 bzw. 30 zum Aufgeben jeweils einer Rohrpost enthaltenden Transportbüchse 31 bzw. 32 in ihrer Umfangswand aufweisen, ist die Umfangswand der mittleren Rohrkammer 27 über die gesamte Länge der Rohrkammer 27 geschlossen. Mit 33 sind Dichtungsringe der Transportbüchsen 31, 32 bezeichnet. Die seitlichen Abstände der aus dem Tragkörper 18 und den Rohrkammern 26 bis 28 gebildeten Baueinheit von den Wänden 4 und 5 in der dargestellten Mittelstellung dieser Baueinheit sind wenigstens gleich dem Mittelachsabstand der Rohrstutzen 13 und 16.

Die Fahrrohranschluß-Rohrstutzen 12 und 13 sind durch ein Umluftrohr 34 mit einem Sperrglied 35 in Form einer Klappe an einem abgeschrägten Ende der in ein hermetisches Gehäuse 36 ragenden Rohrabschnitte des Umluftrohres 34 miteinander verbunden.

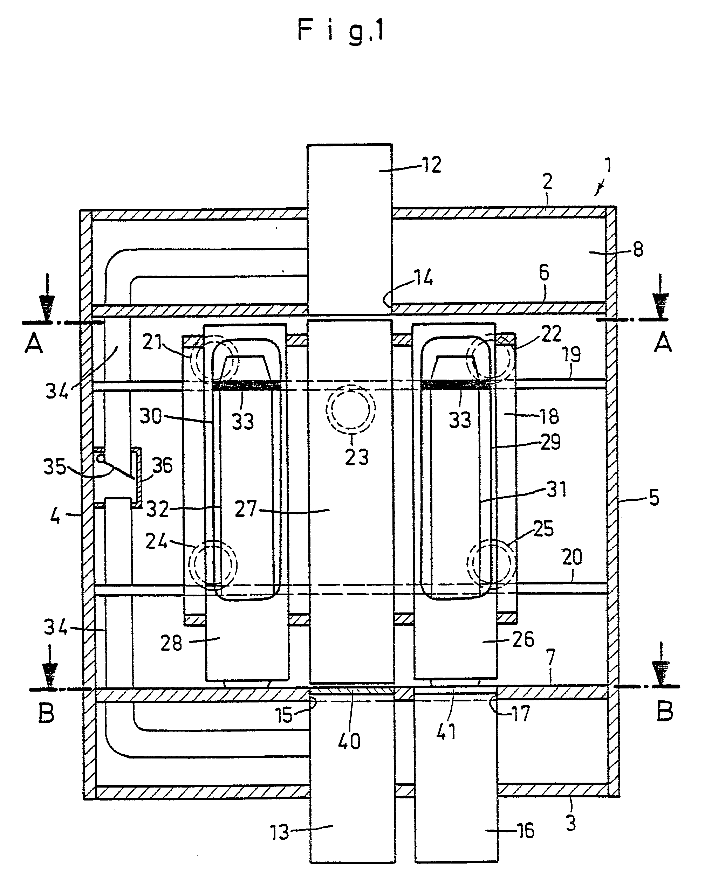

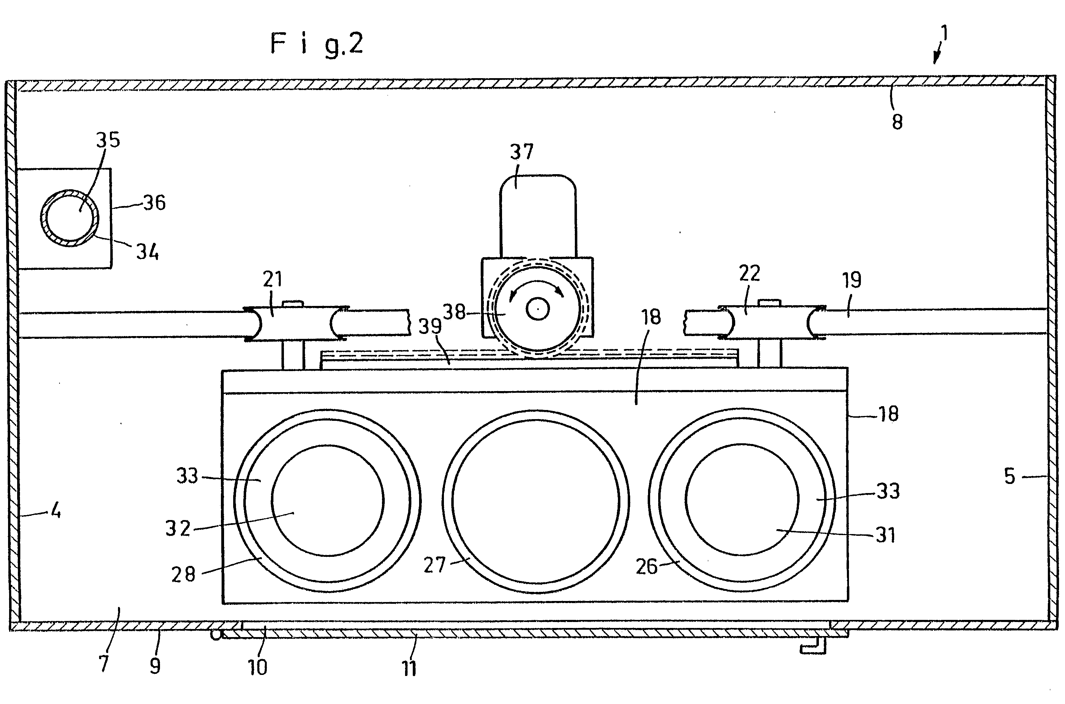

Fig. 2 zeigt den Antrieb des Tragkörpers 18. Dieser enthält einen elektrischen Motor 37, dessen Drehrichtung umkehrbar ist. Der Motor 37 treibt über ein Ritzel 38 eine sich in Verschieberichtung des Tragkörpers 18 erstreckende, am Tragkörper 18 befestigte Zahnstange 39 an. Die Drehrichtungsumkehrung in der (in Fig. 1) linken und rechten Endlage, in der die Rohrkammer 26 mit dem Fahrrohranschluß-Rohrstutzen 13 bzw. die Rohrkammer 28 mit dem Fahrrohranschluß-Rohrstutzen 13 und die Rohrkammer 27 mit dem Ausfahrrohrstutzen 16 fluchten, sowie in der mittleren, in Fig. 1 dargestellten Lage, erfolgt mittels Endschaltern, die durch den Tragkörper 18 betätigt werden.

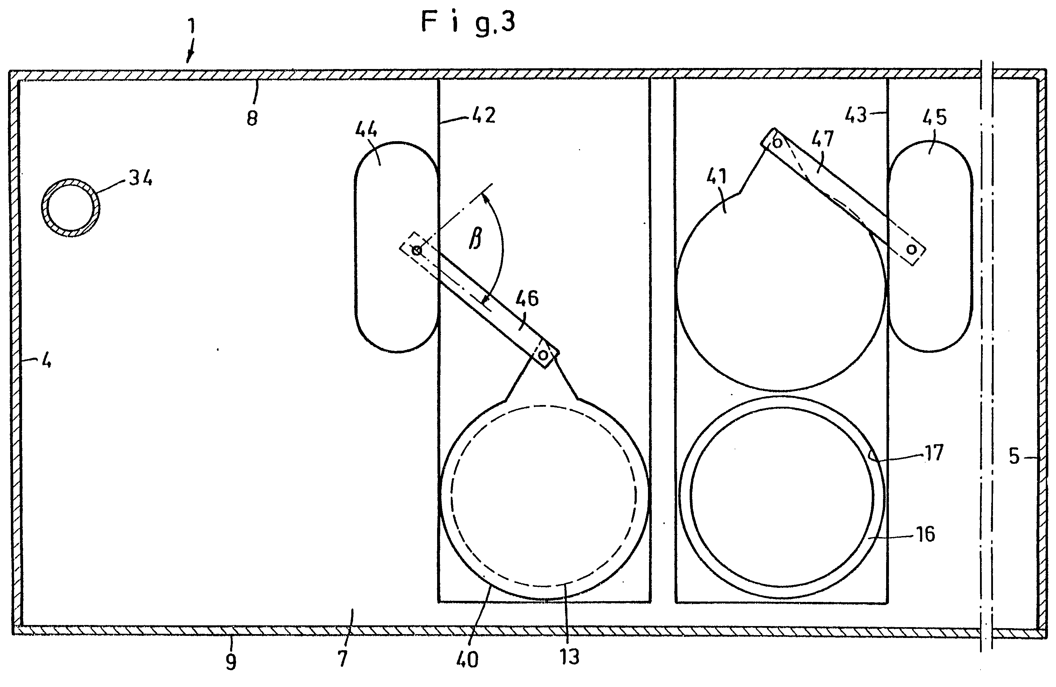

Nach den Fig. 1 und 3 sind die Öffnungen 15 und 17 in der unteren Zwischenwand 7 jeweils durch einen Schieber 40 und 41 in Form einer Platte verschließbar bzw. freigebbar.

Die Schieber 40 und 41 sind in einer horizontalen Ebene senkrecht zur Frontseite des Gehäuses 1 durch Führungsnuten 42, 43 seitlich geführt verschiebbar. In den Fig. 1 bis 3 ist der Schieber 40 nach vorn geschoben, so daß er die Öffnung 15 und damit das Durchfahrrohr verschließt, während der Schieber 41 nach hinten gezogen ist, so daß er die Ausfahröffnung 17 bzw. den Ausfahrrohrstutzen 16 freigibt. Hierbei stellt Fig. 1 den Zustand unmittelbar vor dem Herabfallen der Transportbüchse 31 durch den Ausfahrrohrstutzen 16 in einen nicht dargestellten Auffangbehälter dar.

Die Schieber 40 und 41 sind im Bereich der seitlichen Führungswände der Führungsnuten 42 und 43 kreisrund ausgebildet. Dadurch ist gewährleistet, daß die Schieber beim Hin- und Herbewegen gleichzeitig auch die durch den Schieberantrieb bedingte Drehbewegung ausführen.

Der Schieberantrieb enthält nach Fig. 3 für jeden Schieber einen eigenen elektrischen Motor 44 bzw. 45. Die Wellen der Motoren 44, 45 sind um einen Winkel β von beispielsweise 120° hin- und herdrehbar. Auf den Wellen ist jeweils ein Schwenkhebel 46, 47 drehfest gelagert und mit je einem der Schieber 40, 41 gelenkig verbunden. An den Umkehrpunkten betätigen die Schwenkhebel Endschalter, die den Antrieb beim Erreichen der beiden Endstellungen abschalten.

Die Schieberantriebe sind zur Vereinfachung der Darstellung in den Fig. 1 und 2 weggelassen.

Die vorn zum Beladen offenen Rohrkammern 26 und 28 beiderseits der mittleren Rohrkammer 27 dienen der Speicherung abzurufender Transportbüchsen 31, 32. Zur Speicherung einer Transportbüchse 31 für den Abruf in der Rohrkammer 26 ist der Schieber 41 nach vorn geschoben, so daß er als Unterlage für die gespeicherte Transportbüchse 31 dient. Die mittlere Rohrkammer 27 dient in der in Fig. 1 dargestellten Mittelstellung des Tragkörpers 18 als Durchfahr- oder Empfangsrohr. Für den Empfang einer Transportbüchse in der Rohrkammer 27 wird diese durch Verschieben des Trägers 18 in die in Fig. 1 dargestellte Mittelstellung gebracht und der Schieber 40 zwischen die Rohrkammer 27 und den unteren Fahrrohranschluß-Rohrstutzen 13 geschoben.

Dadurch wird die zu empfangende Transportbüchse auf ihrem Weg von oben nach unten in Fig. 1 in der Rohrkammer 27 pneumatisch abgebremst. Die Fahrluft wird dabei über den Umluftkanal 34 um die mittlere Rohrkammer 27 herumgeleitet, da sich die Klappe 35 entsprechend der gewählten Luftrichtung selbsttätig öffnet (und bei umgekehrter Luftrichtung selbsttätig schließt).

Nachdem die Transportbüchse in der mittleren Rohrkammer 27 zum Stillstand gekommen ist, wird der Tragkörper 18 so weit (nach rechts) verschoben, daß die Rohrkammer 27 mit dem Ausfahrrohrstutzen 16 fluchtet. Dabei werden die in den Rohrkammern 28 und 26 gegebenenfalls gespeicherten Transportbüchsen auf ihren Unterlagen gleitend mitbewegt. Wenn sich die mittlere Rohrkammer 27 über dem Ausfahrrohrstutzen 16 befindet, wird der Schieber 41 nach hinten gezogen und der Ausfahrrohrstutzen 16 damit freigegeben, so daß die Transportbüchse die Station verläßt und in den Auffangbehälter fällt. Danach wird der Ausfahrrohrstutzen 16 wieder durch den Schieber 41 verschlossen. Der Tragkörper 18 fährt in die (in Fig. 1 dargestellte) Mittelstellung, und der Schieber 40 wird nach hinten gezogen. Dadurch wird die mittlere Rohrkammer 27 und damit das Fahrrohr auf Durchfahrt gestellt.

Für den Abruf einer gespeicherten Transportbüchse wird zunächst der untere Fahrrohranschluß-Rohrstutzen 13 durch den Schieber 40 verschlossen. Danach wird der Tragkörper 18 entweder zur einen oder anderen Seite (nach rechts oder links) geschoben. Damit steht die rechte oder linke Speicher-Rohrkammer 26 oder 28 über dem unteren Fahrrohranschluß-Rohrstutzen 13. Der Schieber 40 wird nach hinten gezogen und gibt den unteren Fahrrohranschluß-Rohrstutzen 13 frei. Die Transportbüchse verläßt die Station in den unteren (nicht dargestellten) Fahrrohrabschnitt. Sodann wird der Tragkörper 18 wieder in die Mittelstellung gefahren, so daß die mittlere Rohrkammer 27 wieder auf Durchfahrt steht.

Die Steuerung der Antriebe von Tragkörper 18 und Schieber 40, 41 erfolgt selbsttätig durch eine (nicht dargestellte) elektronische Steuereinrichtung, die gleichzeitig auch die Richtung der Förderluft steuert. Das Laden der Speicher-Rohrkammern 26 und 28 erfolgt bei geöffneter Tür 11 durch die Ladeöffnung 10 in der vorderen Wand 9 des Gehäuses 11 hindurch.

Abwandlungen des ersten Ausführungsbeispiels können darin bestehen, daß die Schieber 40, 41 seitlich verschiebbar und ihre Antriebe entsprechend in der Schiebeebene des Tragkörpers 18 seitlich neben diesem angeordnet werden. Auch der Antrieb des Tragkörpers 18 kann seitlich neben diesem angeordnet werden. Dies erfordert zwar eine breitere Ausbildung des Gehäuses in der Schieberichtung des Tragkörpers 18, verringert jedoch die Tiefe des Gehäuses senkrecht zur Schiebeebene des Tragkörpers 18. Sodann können der Tragkörper 18 und die Rohrkammern 26 bis 28 einteilig ausgebildet sein. Die Führungsnuten 42, 43 können ferner durch eine Abdeckplatte mit Öffnungen abgedeckt sein, die mit den Bohrungen der Rohrstutzen 13 und 16 fluchten. Gegebenenfalls ist die Abdeckplatte so dünn ausgebildet, daß ihre Öffnungen eine seitliche Verschiebung der Transportbüchsen nicht behindern. Statt als Wagen kann der Tragkörper 18 auch als gleitend verschiebbarer Schlitten ausgebildet sein.

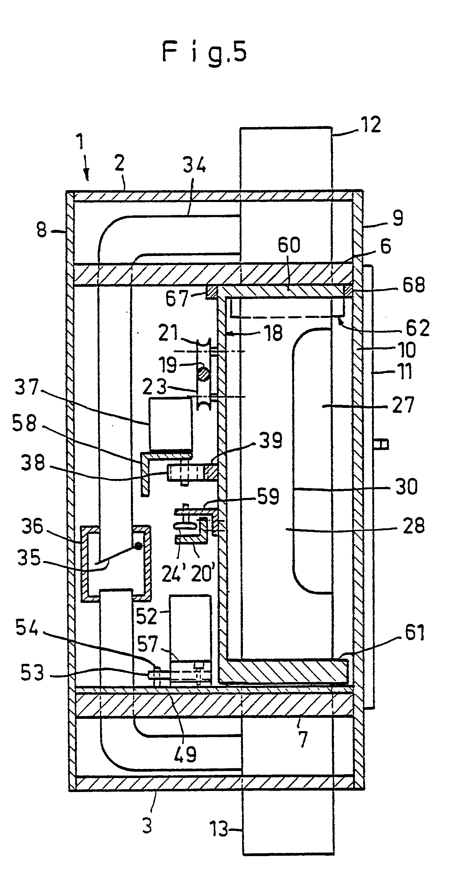

Die bei dem zweiten Ausführungsbeispiel nach den Fig. 5 bis 6 mit gleichen Bezugszahlen wie bei dem ersten Ausführungsbeispiel versehenen Bauteile entsprechen denen des ersten Ausführungsbeispiels. Nachstehend werden daher nur die wesentlichen Abweichungen des zweiten Ausführungsbeispiels vom ersten Ausführungsbeispiel beschrieben.

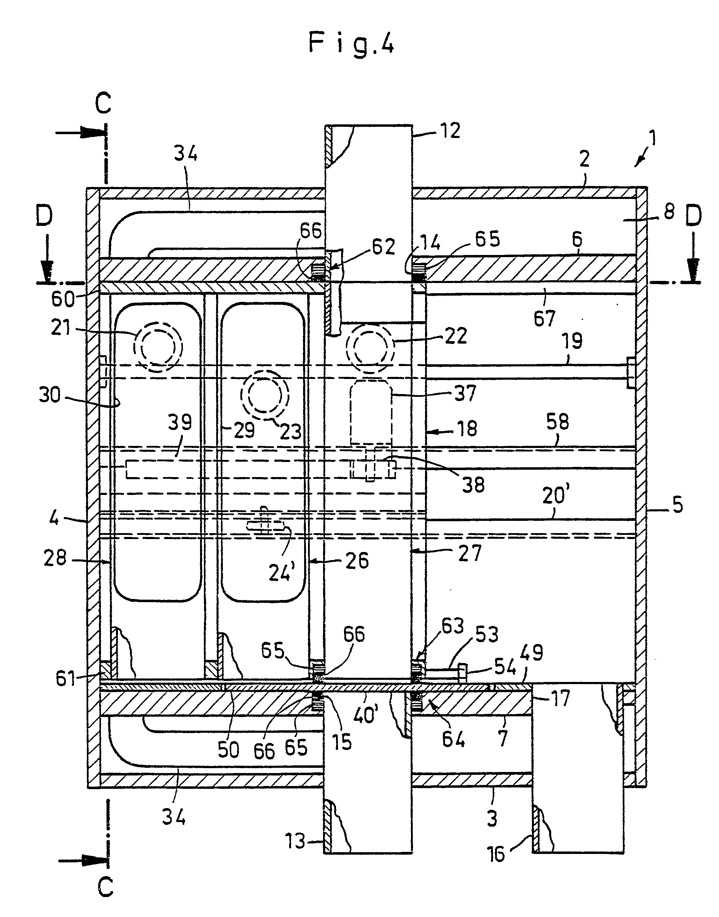

Bei dem Ausführungsbeispiel nach den Fig. 4 bis 6 sind die der Speicherung abzusendender Rohrpostbüchsen dienenden Rohrkammern 26 und 28 beide auf der einen Seite (links in Fig. 4) der als Durchfahr- und Empfangsrohrkammer dienenden Rohrkammer 27 angeordnet.

Die Ausfahröffnung 17 ist nicht nur um eine dem Mittelachsabstand der Rohrkammern entsprechende Teilung, sondern um zwei Teilungen gegenüber der Fahrrohranschlußöffnung 15 nach rechts in Fig. 4 versetzt. Ferner ist die Ausfahröffnung 17 nicht durch eine Schieberplatte verschließbar, sondern ständig offen.

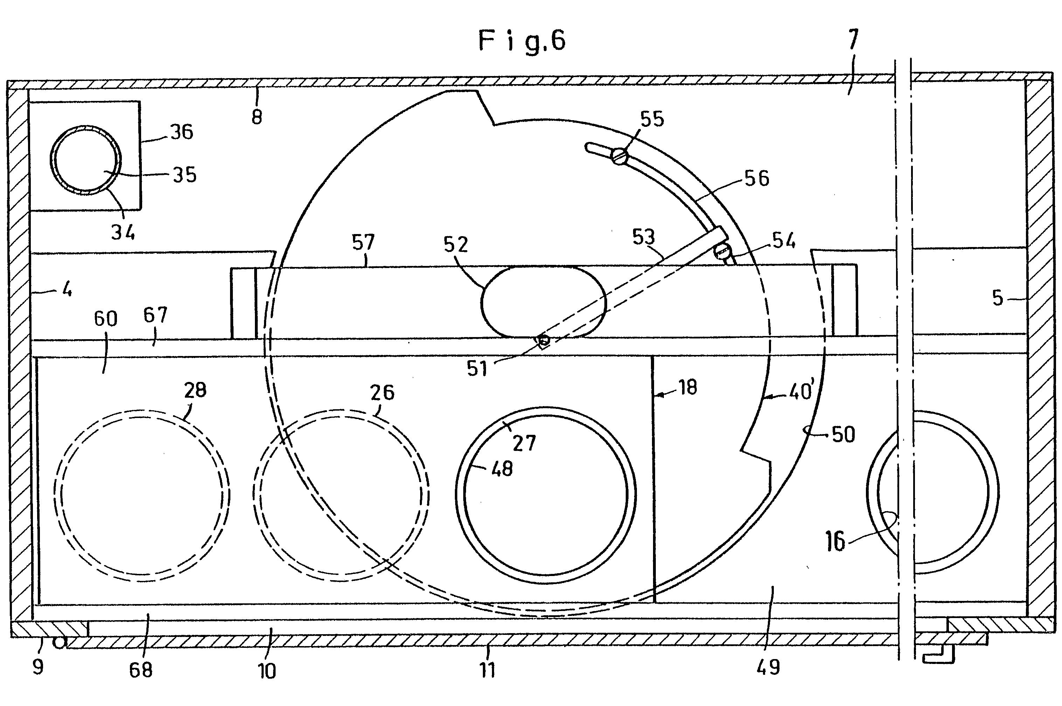

Die Fahrrohranschlußöffnung 15 wird durch einen plattenförmigen Drehschieber 40' mit einer sich über wenigstens etwa 2,5 Quadranten erstreckende Kreiskontur und einem Durchgangsloch 48, das in dem einen Endquadranten des Drehschiebers 40' liegt und einen Durchmesser aufweist, der weitgehend dem Innendurchmesser der Rohrkammern 26 bis 28 entspricht, entweder freigegeben, wie in Fig. 6 dargestellt, oder durch eine Drehung des Drehschiebers 40' um etwa 90° entgegen dem Uhrzeigersinn verschlossen. Die Zwischenwand 7 ist auf ihrer Oberseite mit einer Gleitplatte 49 versehen, die eine teilkreisförmige Aussparung 50 aufweist, in der die Drehschieberplatte 40' um eine Drehachse 51 drehbar gelagert ist. Die Oberseiten der Gleitplatte 49 und der Drehschieberplatte 40' sind bündig, so daß beim Verschieben des Tragkörpers 18 in den Rohrkammern 26 bis 28 befindliche Transportbüchsen über eine absatzlose Fläche gleiten. Der Drehschieber 40' wird durch einen reversierbaren Motor 52 über einen Mitnehmerhebel 53 angetrieben. Die mit der Drehachse 51 zusammenfallende Welle des Motors 52 ist um 120° hin- und herschwenkbar, wie bei einem herkömmlichen Scheibenwischermotor. Der Mitnehmerhebel 53 ist auf der Welle des Motors 52 befestigt und greift an dem einen oder anderen von zwei Mitnehmerstiften 54 und 55 an, die in einem sich über einen Teil eines Kreisbogens erstreckenden Langloch 56 auf einem Umkreis in Bezug auf die Drehachse 51 verstellbar befestigt sind. Der in den Bereich zwischen den Mitnehmerstiften 54 und 55 eingreifende Mitnehmerhebel 53 führt daher zunächst eine dem Abstand der Mitnehmerstifte 54 und 55 entsprechende Leerbewegung aus, bevor er über den einen oder anderen Mitnehmerstift 54 bzw. 55 den Drehschieber 40' um den gewünschten Drehwinkel von nur etwa 90°, der aufgrund der Leerbewegung kleiner als der Schwenkwinkelbereich von 120° des Motors 52 ist, in die eine oder andere Endstellung, in der die Fahrrohranschlußöffnung 15 geöffnet oder geschlossen ist, mitnimmt.

Der Motor 52 ist auf einer die Aussparung 50 und den Drehschieber 40' überbrückenden Brücke 57 gelagert, die in Fig. 4 zur Vereinfachung der Darstellung weggelassen ist.

Der den Tragkörper 18 über Ritzel 38 und Zahnstange 39 antreibende Motor 37 ist auf einem Querträger 58 gelagert, dessen Enden jeweils an einer der Seitenwände 4 und 5 des Gehäuses 1 befestigt sind.

Statt der bei dem Ausführungsbeispiel nach den Fig. 1 bis 3 vorgesehenen Rollen 24 und 25 und der Stange 20 ist eine einzige Rolle 24' in einem am Tragkörper 18 befestigten Träger 59 drehbar gelagert und an einer im Querschnitt winkelförmigen Führungsschiene 20' anliegend geführt.

Die Antriebseinrichtung 37, 38, 39 und 58 sowie die Führungseinrichtung 19 bis 23, 24' und 59 sind in Fig. 6 zur Vereinfachung der Darstellung weggelassen.

Die oben geschlossenen und unten offenen Rohrkammern 26 und 28 sind mit ihrem oberen Ende an der Unterseite einer oberen Querwand 60 des Trägers 18 befestigt und durch Löcher einer unteren Querwand 61 des Trägers 18 bis in die Nähe der Gleitplatte 49 hindurchgeführt.

Die Rohrkammer 27 ist nach den Fig. 4 und 5 oben und unten durch jeweils eine Ringdichtung 62 und 63 gegen die Unterseite der oberen Zwischenwand 6 bzw. die Oberseite des Drehschiebers 40' und durch eine Ringdichtung 64 gegen die Unterseite des Drehschiebers 40' luftdicht abgedichtet, so daß in der Stellung nach Fig. 4 keine Fahrluft in das Gehäuse 1 und von dort über die Ausfahröffnung 17 entweichen kann. Die Ringdichtungen 62, 63 und 64 bestehen nach Fig. 4 jeweils aus einer in die Wände 6, 7 und 61 eingearbeitete Ringkammer mit einem darin auf elastischem Material 65, wie Metallfedern oder Moosgummi, gelagerten Graphitring 66.

Der Tragkörper 18 für die Rohrkammern 26 bis 27 gleitet mit seiner oberen Wand 60 an der Unterseite der Zwischenwand 6, wobei durch die Ringdichtungen 63, 63 ein Austritt der Fahrluft vermieden wird.

Die obere Wand 60 des Tragkörpers 18 wird ferner zwischen Führungsschienen 67 und 68 geführt, die an der Unterseite der Zwischenwand 6 des Gehäuses 1 befestigt sind.

Das zweite Ausführungsbeispiel nach den Fig. 4 bis 6 hat gegenüber dem ersten Ausführungsbeispiel nach den Fig. 1 bis 3 den Vorteil, daß die Transportbüchsen in den Rohrkammern 26 bis 27 beim Verschieben des Tragkörpers 18 über eine ebene Fläche ohne Absätze gleiten. Ferner entfällt der bei dem ersten Ausführungsbeispiel vorgesehene zweite Schieber 41 mit zugehöriger Antriebseinrichtung 45, 47, weil die Fahrrohranschlußöffnung 14 beziehungsweise Einfahröffnung entweder durch die Ringdichtung 62 oder durch den Tragkörper 18 beim Verschieben verschlossen wird. Dadurch kann keine Fahrluft in das Stationsgehäuse 1 eintreten und demzufolge auch nicht über die Ausfahröffnung 17 austreten.

Damit ergibt sich folgende Wirkungsweise des zweiten Ausführungsbeispiels:

Für eine Durchfahrt wird der Tragkörper 18 in die in Fig. 4 dargestellte Lage gebracht. Die durchgehende Rohrkammer 27 fluchtet dann mit den Öffnungen der Fahrrohranschlußstutzen 12 und 13. Der Drehschieber 40' wird mit seinem Loch 48 mit dem Fahrrohranschlußstutzen 13 zur Deckung gebracht. Eine im Fahrrohr befindliche Transportbüchse kann dann die Rohrpoststation in beiden Richtungen ungehindert durchfahren.

Für eine Ausfahrt nimmt der Tragkörper 18 zunächst die gleiche Lage nach Fig. 4 wie für eine Durchfahrt ein. Der Drehschieber 40' hat jedoch nach einer Drehung um etwa 90° die Öffnung des Ausfahrrohrstutzens 13 verschlossen. Die Fahrluft strömt über das Umluftrohr 34. Eine von oben ankommende Transportbüchse fährt dann in die Rohrkammer 27, in der sie durch den darin gebildeten Luftsack abgebremst wird, bis sie auf dem Drehschieber 40' steht. Danach wird der Tragkörper 18 durch den Motor 37 über das Ritzel 38 und die Zahnstange 39 um zwei Teilungen nach rechts verschoben, so daß die Rohrkammer 27 mit dem Ausfahrrohrstutzen 16 fluchtet und die Transportbüchse die Rohrpoststation über die Ausfahröffnung verläßt.

Von der Rohrpoststation abzusendende Transportbüchsen befinden sich in den Rohrkammern 26 und 28. Zum Absenden einer gespeicherten Transportbüchse wird zunächst der Drehschieber 40' aus der in Fig. 6 dargestellten Lage um etwa 90° entgegen dem Urzeigersinne verdreht, so daß der Fahrrohranschlußrohrstutzen 13 gesperrt wird. Der Tragkörper 18 fährt dann um eine oder zwei Teilungen nach rechts (in Fig. 4). Die Fahrluft wird abgeschaltet und der Drehschieber 40' zurückgedreht, so daß der Rohrstutzen 13 freigegeben wird. Die Transportbüchse fällt dann nach unten in das Fahrrohr. Danach fährt der Tragkörper 18 in die Durchfahrstellung nach Fig. 4 zurück, und die Fahrluft wird wieder eingeschaltet.

**Patentansprüche**

1. Rohrpoststation für Sende-, Empfangs- und Durchlaufbetrieb, mit einer Ladeöffnung (10) für abzusendende Transportbüchsen (31 ; 32), mit drei Rohrkammern (26, 27, 28) in einem Gehäuse (1), das eine erste Wand (7 ; 49) mit einer ersten Fahrrohranschlußöffnung (15) für den Durchgang einer die Rohrpost enthaltenden Transportbüchse (31 ; 32) und mit einer Ausfahröffnung (17) sowie eine zweite Wand (6) mit einer zur ersten (15) koaxialen zweiten Fahrrohranschlußöffnung (14) aufweist, wobei die Ausfahr- und Fahrrohranschlußöffnungen und Rohrkammern in einer gemeinsamen Ebene angeordnet sind, die erste und zweite Rohrkammer (28, 27) durch einen in dieser Ebene verschiebbaren Tragkörper (18) starr gekoppelt sind und der Tragkörper (18) eine erste Stellung hat, in der die erste Rohrkammer (28) mit den Fahrrohranschlußöffnungen (14, 15) und die zweite Rohrkammer (27) mit der Ausfahröffnung (17) fluchten, und eine zweite Stellung hat, in der die zweite Rohrkammer (27) mit den Fahrrohranschlußöffnungen (14, 15) fluchtet, dadurch gekennzeichnet, daß der Tragkörper (18) eine dritte Stellung hat, in der die dritte Rohrkammer (26) mit den Fahrrohranschlußöffnungen (14, 15) fluchtet, daß die dritte Rohrkammer (26) mit der zweiten Rohrkammer (27) durch den Tragkörper (18) weitgehend in gleicher Höhe mit der ersten (28) und der zweiten Rohrkammer (27) starr gekoppelt ist und daß ein erster Schieber (40 ; 40') zum wahlweisen Verschließen und Öffnen der mit der ersten Fahrrohranschlußöffnung (15) fluchtenden Rohrkammerenden vorgesehen ist.

2. Rohrpoststation nach Anspruch 1, dadurch gekennzeichnet, daß ein zweiter Schieber (41) zum wahlweisen Verschließen und Öffnen der mit der Ausfahröffnung (17) fluchtenden Rohrkammerenden vorgesehen ist.

3. Rohrpoststation nach Anspruch 1 oder 2, bei der der Mittelachsabstand von erster und zweiter Rohrkammer gleich dem Mittelachsabstand von erster Fahrrohranschlußöffnung und Ausfahröffnung ist, dadurch gekennzeichnet, daß die zweite Rohrkammer (27) in der Mitte zwischen der ersten (28) und der dritten Rohrkammer (26) angeordnet ist (Fig. 1).

4. Rohrpoststation nach Anspruch 1, dadurch gekennzeichnet, daß der Mittelachsabstand von erster und dritter Rohrkammer (28, 26) gleich dem halben Mittelachsabstand von erster Fahrrohranschlußöffnung (15) und Ausfahröffnung (17) ist und daß die dritte Rohrkammer (26) in der Mitte zwischen der zweiten (27) und der ersten Rohrkammer (28) angeordnet ist (Fig. 4).

5. Rohrpoststation nach Anspruch 1 oder 4, dadurch gekennzeichnet, daß der erste Schieber (40 ; 40') in der ersten Fahrrohranschlußöffnung (15) gelagert ist, so daß die Innenseite der ersten Wand (7 ; 49) und die Innenseite des ersten Schiebers (40 ; 40') weitgehend in derselben Ebene liegen.

6. Rohrpoststation nach Anspruch 2, dadurch gekennzeichnet, daß der zweite Schieber (41) in der Ausfahröffnung (17) gelagert ist, so daß die Innenseite der ersten Wand (7) und die Innenseite des zweiten Schiebers (41) weitgehend in derselben Ebene liegen.

7. Rohrpoststation nach einem der Ansprüche 1 bis 6, dadurch gekennzeichnet, daß der erste Schieber (40, 40') plattenförmig und die erste Fahrrohranschlußöffnung (15) durch den ersten Schieber luftdicht verschließbar ist.

8. Rohrpoststation nach Anspruch 2 oder 6, dadurch gekennzeichnet, daß der zweite Schieber (41) plattenförmig und die Ausfahröffnung (17) durch den zweiten Schieber (41) luftdicht verschließbar ist.

9. Rohrpoststation nach einem der Ansprüche 1 bis 8, dadurch gekennzeichnet, daß der erste Schieber (40') ein Drehschieber ist.

10. Rohrpoststation nach Anspruch 9, dadurch gekennzeichnet, daß der Drehschieber (40') eine Platte mit einer sich über wenigstens etwa 2,5 Quadranten erstreckenden Kreiskontur und mit einem Durchgangsloch (48) in ihrem einen Endquadranten aufweist, das einen Durchmesser aufweist, der weitgehend dem Innendurchmesser der Rohrkammern (26-28) entspricht.

11. Rohrpoststation nach einem der Ansprüche 1 bis 10, dadurch gekennzeichnet, daß der Tragkörper (18) eine ebene Oberseite aufweist, durch die die zweite Fahrrohranschlußöffnung (14), bei einer Verschiebung der zweiten Rohrkammer (27) neben die Fahrrohranschlußöffnungen (14, 17), verschließbar ist.

12. Rohrpoststation nach einem der Ansprüche 1 bis 11, dadurch gekennzeichnet, daß die Enden der zweiten Rohrkammer (27) durch je eine Ringdichtung (62, 63) gegen den ersten Schieber (40') beziehungsweise gegen die zweite Wand (6) abdichtbar sind.

13. Rohrpoststation nach einem der Ansprüche 1 bis 12, dadurch gekennzeichnet, daß die Verschiebeebene des Tragkörpers (18) zur Frontseite des Gehäuses (1) parallel ist und daß die erste (28) und die dritte Rohrkammer (26) mit einer einer frontseitigen Ladeöffnung (10) des Gehäuses (1) zugekehrten Ladeöffnung (30, 31) versehen sind.

14. Rohrpoststation nach einem der Ansprüche 1 bis 13, bei der die Fahrrohranschlußöffnungen jeweils mit einem Fahrrohranschlußstutzen versehen sind, die in Abhängigkeit von der Stelung der Rohrkammern durch einen Umluftkanal verbindbar sind, dadurch gekennzeichnet, daß der Umluftkanal (34) stationär und in Abhängigkeit von der Stellung der Rohrkammern (26-28) durch ein Sperrglied (35) absperrbar ist.

15. Rohrpoststation nach einem der Ansprüche 2, 6 und 8, dadurch gekennzeichnet, daß die Schieber (40, 41) weitgehend kreisrunde Platten, in senkrecht zur Frontseite des Gehäuses (1) verlaufenden Führungsnuten (42, 43) gelagert und durch seitlich neben den Führungsnuten (42, 43) gelagerte reversierbare Motoren (44, 45) über Schwenkhebel (46, 47) verschiebbar sind.

## Claims

1. Pneumatic tube station for sending, receiving and transit operation, with a loading opening (10) for transport shells (31 ; 32) to be despatched, with three tube chambers (26, 27, 28) in a housing (1), which has a first wall (7 ; 49) with a first passage tube connection opening (15) for the passage of a transport shell (31 ; 32) containing the pneumatic mail and with an outlet opening (17) as well as a second wall (6) with a second passage tube connection opening (14) coaxial to the first (15), wherein the outlet and passage tube connection openings and tube chambers are arranged in a common plane, the first and second tube chambers (28, 27) are rigidly coupled by a carrier member (18) slidable in this plane, and the carrier member (18) has a first position in which the first tube chamber (28) registers with the passage tube connection openings (14, 15) and the second tube chamber (27) with the outlet opening (17), and has a second position in which the second tube chamber (27) registers with the passage tube connection openings (14, 15), characterised in that the carrier body (18) has a third position in which the third tube chamber (26) registers with the carrier tube connection openings (14, 15), that the third tube chamber (26) is rigidly coupled with the second tube chamber (27) by the carrier member (18) substantially at the same level with the first (28) and the second tube chamber (27), and that a first slider (40 ; 40') is provided for closing and opening, according to choice, the ends of the tube chamber registering with the first passage tube connection opening (15).

2. Pneumatic tube station according to claim 1, characterised in that a second slider (41) is provided for closing and opening, according to choice, the tube chamber ends registering with the outlet opening (17).

3. Pneumatic tube station according to claim 1 or 2, in which the separation of the central axes of the first and second tube chambers equals the separation of the central axes of the first passage tube connection opening and outlet opening, characterised in that the second tube chamber (27) is arranged centrally between the first (28) and the third tube chamber (26) (Fig. 1).

4. Pneumatic tube station according to claim 1, characterised in that the separation of the central axes of the first and third tube chambers (28, 26) equals half the separation of the central axes of the first passage tube connection (15) and outlet opening (17) and that the third tube chamber (26) is arranged centrally between the second (27) and the first tube chamber (28) (Fig. 4).

5. Pneumatic tube station according to claim 1 or 4, characterised in that the first slider (40 ; 40') is mounted in the first passage tube connection opening (15) so that the inner side of the first wall (7 ; 49) and the inner side of the first slider (40 ; 40') lie substantially in the same plane.

6. Pneumatic tube station according to claim 2, characterised in that the second slider (41) is mounted in the outlet opening (17) so that the inner side of the first wall (7) and the inner side of the second slider (41) lie substantially in the same plane.

7. Pneumatic tube station according to one of claims 1 to 6, characterised in that the first slider (40, 40') is in the shape of a plate and the first passage tube connection opening (15) is closable airtightly by the first slider.

8. Pneumatic tube station according to claim 2 or 6, characterised in that the second slider (41) is in the shape of a plate and the outlet opening (17) can be closed airtightly by the second slider (41).

9. Pneumatic tube station according to one of claims 1 to 8, characterised in that the first slider (40') is a rotary slider.

10. Pneumatic tube station according to claim 9, characterised in that the rotary slider (40') has a plate with a circular outline extending over at least 2.5 quadrants and with a throughhole (48) in its one end quadrant, which has a diameter which substantially corresponds to the interior diameter of the tube chambers (26-28).

11. Pneumatic tube station according to one of claims 1 to 10, characterised in that the carrier member (18) has a plane upper side by which the second passage tube connection opening (14) can be closed on sliding of the second tube chamber (27) against the passage tube connection openings (14, 17).

12. Pneumatic tube station according to one of claims 1 to 11, characterised in that the ends of the second tube chamber (27) are sealable in each case by a ring seal (62, 63) against the first slider (40') or against the second wall (6).

13. Pneumatic tube station according to one of claims 1 to 12, characterised in that the sliding plane of the carrier member (18) is parallel to the front side of the housing (1) and that the first (28) and the thrird tube chamber (26) are provided with a loading opening (30, 31) turned towards a front side loading opening (10) of the housing (1).

14. Pneumatic tube station according to one of claims 1 to 13, in which the passage tube connection openings are each provided with a passage tube connection post which in dependence on the position of the tube chambers can be connected with a diversion air channel, characterised in that the diversion air channel (34) is stationary and can be shut off by a cutoff member (35) in dependence on the position of the tube chambers (26-28).

15. Pneumatic tube station according to one of claims 2, 6 and 8, characterised in that the sliders (40, 41) substantially circular plates, are mounted in guide grooves (42, 43) running substantially perpendicular to the front of the housing (1) and are slidable by reversible motors (44, 45) mounted laterally by the guide grooves (42, 43) via swinging levers (46, 47).

**Revendications**

1. Poste pneumatique pour mise en service d'émission, de réception et de passage, ce poste comportant une ouverture de chargement (10) pour des boîtes de transport (31 ; 32) devant être expédiées, trois chambres tubulaires (26, 27, 28) disposées dans un logement (1) comportant une première paroi (7 ; 49) dans laquelle est pratiquée une première ouverture de raccordement de tubes de transport (15) pour le passage d'une boîte de transport (31 ; 32) contenant le poste pneumatique, ainsi qu'une ouverture de sortie (17) et une deuxième paroi (6) comportant une deuxième ouverture (14) de raccordement de tubes de transport coaxiale à la première (15), les ouvertures de raccordement des tubes de sortie et de transport, ainsi que les chambres tubulaires étant disposées dans un plan commun, la première et la deuxième chambre tubulaire (26, 27) étant accouplées rigidement par un corps support (18) pouvant coulisser dans ce plan, ce corps support (18) occupant une première position dans laquelle la première chambre tubulaire (26) est affleurante aux ouvertures (14, 15) de raccordement des tubes de transport, tandis que la deuxième chambre tubulaire (27) est affleurante à l'ouverture de sortie (17), ainsi qu'une deuxième position dans laquelle la deuxième chambre tubulaire (27) est affleurante aux ouvertures (14, 15) de raccordement des tubes de transport, caractérisé en ce que le corps support (18) occupe une troisième position dans laquelle la troisième chambre tubulaire (28) est affleurante aux ouvertures (14, 15) de raccordement des tubes de transport, en ce que la troisième chambre tubulaire (28) est accouplée rigidement à la deuxième chambre tubulaire (27) par le corps support (18) essentiellement au même niveau que la première (26) et la deuxième chambre tubulaire (27) et en ce qu'un premier coulisseau (40 ; 40') est prévu pour la fermeture et l'ouverture sélectives des extrémités des chambres tubulaires, qui sont affleurantes à la première ouverture (15) de raccordement des tubes de transport.

2. Poste pneumatique selon la revendication 1, caractérisé en ce qu'on prévoit un deuxième curseur (41) pour la fermeture et l'ouverture sélectives des extrémités des chambres tubulaires qui sont affleurantes à l'ouverture de sortie (17).

3. Poste pneumatique selon la revendication 1 ou 2, dans lequel l'écartement des axes centraux de la première et de la deuxième chambre tubulaires est égal à l'écartement des axes centraux de la première ouverture de raccordement des tubes de transport et de l'ouverture de sortie, caractérisé en ce que la deuxième chambre tubulaire (27) est disposée au milieu de la distance comprise entre la première (26) et la troisième chambre tubulaire (26) (figure 1).

4. Poste pneumatique selon la revendication 1, caractérisé en ce que l'écartement entre les axes centraux de la première et de la troisième chambre tubulaire (26, 28) est égal à la moitié de la distance comprise entre les axes centraux de la première ouverture (15) de raccordement des tubes de transport et de l'ouverture de sortie (17) et en ce que la troisième chambre tubulaire (28) est située au centre de la distance comprise entre la deuxième (27) et la première chambre tubulaire (26) (figure 4).

5. Poste pneumatique selon la revendication 1 ou 4, caractérisé en ce que le premier curseur (40 ; 40') est monté dans la première ouverture (15) de raccordement des tubes de transport, de telle sorte que la face intérieure de la première paroi (7 ; 49) et la face intérieure du premier curseur (40 ; 40') soient situées essentiellement dans le même plan.

6. Poste pneumatique selon la revendication 2, caractérisé en ce que le deuxième curseur (41) est monté dans l'ouverture de sortie (17), de telle sorte que la face intérieure de la première paroi (7) et la face intérieure du deuxième curseur (41) soient situées essentiellement dans le même plan.

7. Poste pneumatique selon une des revendications 1 à 6, caractérisé en ce que le premier curseur (40, 40') a la forme d'une plaque, tandis que la première ouverture (15) de raccordement des tubes de transport peut être fermée de manière étanche à l'air par le premier curseur.

8. Poste pneumatique selon la revendication 2 ou 6, caractérisé en ce que le deuxième curseur (41) est réalisé sous forme d'une plaque, tandis que l'ouverture de sortie (17) peut être fermée de manière étanche à l'air par le deuxième curseur (41).

9. Poste pneumatique selon une des revendications 1 à 8, caractérisé en ce que le premier curseur (40') est un curseur rotatif.

10. Poste pneumatique selon la revendication 9, caractérisé en ce que le curseur rotatif (40') comporte une plaque ayant un contour circulaire s'étendant à peu près sur au moins 2,5 quarts de cercle et comportant, dans un quart de cercle terminal, un trou de passage (48) ayant un diamètre correspondant essentiellement au diamètre intérieur des chambres tubulaires (26, 28).

11. Poste pneumatique selon une des revendications 1 à 10, caractérisé en ce que le corps support (18) a une face supérieure plane par laquelle, lors d'un décalage de la deuxième chambre tubulaire (27), outre les ouvertures (14, 17) de raccordement des tubes de transport, la deuxième ouverture (14) de raccordement des tubes de transport peut être fermée.

12. Poste pneumatique selon une des revendications 1 à 11, caractérisé en ce que les extrémités de la deuxième chambre tubulaire (27) peuvent être étanchées chaque fois par un joint étanche annulaire (62, 63) contre le premier curseur (40') ou contre la deuxième paroi (6).

13. Poste pneumatique selon une des revendications 1 à 12, caractérisé en ce que le plan de décalage du corps support (18) est parallèle à la face frontale du logement (1) et en ce que la première (26) et la troisième chambre tubulaire (28) comportent une ouverture de chargement (30, 31) tournée vers une ouverture de chargement frontale (10) du logement (1).

14. Poste pneumatique selon une des revendications 1 à 13, dans lequel les ouvertures de raccordement des tubes de transport sont pourvues chacune d'une tubulure de raccordement de tubes de transport qui peuvent être reliées par un canal de circulation d'air en fonction de la position des chambres tubulaires, caractérisé en ce que le canal de circulation d'air (34) peut être bloqué en position fixe et en fonction de la position des chambres tubulaires (26, 28) par un organe de blocage (35).

15. Poste pneumatique selon une des revendications 2, 6 et 8, caractérisé en ce que les curseurs (40, 41) sont essentiellement des plaques circulaires montées dans des rainures de guidage (42, 43) s'étendant perpendiculairement à la face frontale du logement (1), tandis qu'ils peuvent être déplacés à l'intervention de leviers pivotants (46, 47) par des moteurs réversibles (44, 45) montés latéralement à côté des rainures de guidage (42, 43).

# F i g.1

Fig.2

0 216 222

# Fig.3

0 216 222

# Fig.4

# Fig.5

Fig.6